# EUROPEAN PATENT APPLICATION

(11) **EP 3 457 289 A1**
(43) Date of publication of application: **20.03.2019**
(21) Application number: 17191488.0
(22) Date of filing: 15.09.2017
(51) Int. Cl.: G06F 12/0862, G06F 12/0871, G06F 12/121, G06F 12/126, G06F 12/122

(54) **METHOD FOR DETERMINING DATA IN CACHE MEMORY OF CLOUD STORAGE ARCHITECTURE AND CLOUD STORAGE SYSTEM USING THE SAME**

(71) Applicant: ProphetStor Data Services, Inc., 403 Taichung (TW)
(72) Inventor: CHEN, Wen Shyen, Taichung (TW); HSIEH, Wen Chieh, Taichung (TW); HUANG, Ming Jen, Taichung (TW)
(74) Representative: Lang, Christian

(57) **Abstract**

A method for determining data in cache memory of a cloud storage architecture and a cloud storage system using the method are disclosed. The method includes the steps of: A. recording transactions from cache memory of a cloud storage during a period of time in the past, wherein each transaction comprises a time of recording, or a time of recording and cached data been accessed during the period of time in the past; B. assigning a specific time in the future; C. calculating a time-associated confidence for every cached data from the transactions based on a reference time; D. ranking the time-associated confidences; and E. providing the cached data with higher time-associated confidence in the catch memory, and removing the cached data in the cache memory with lower time-associated confidence when the cache memory is full before the specific time in the future.

## Description

### FIELD OF THE INVENTION

The present invention relates to a method for determining cached data for cloud storage architecture and a cloud storage system using the method. More particularly, the present invention relates to method for determining data in cache memory of the cloud storage architecture and a cloud storage system using the method.

### BACKGROUND OF THE INVENTION

For a cloud service system, it usually tries to provide its services to clients as soon as possible in response to the requests therefrom. When the number of clients is not large, the goal can be easily achieved. However, if the number of clients is significant, due to the limitation of hardware architecture of the cloud service system and the flow of network, there should have a reasonable room for response time. On the other hand, if the cloud service is commercially competing with other cloud services, no matter what the constraint is, with limited resources, the cloud service system should skillfully respond to their clients' requests in the shortest time. That is a popular issue that lots of developers of cloud system are faced with, and a suitable solution is very much welcome.

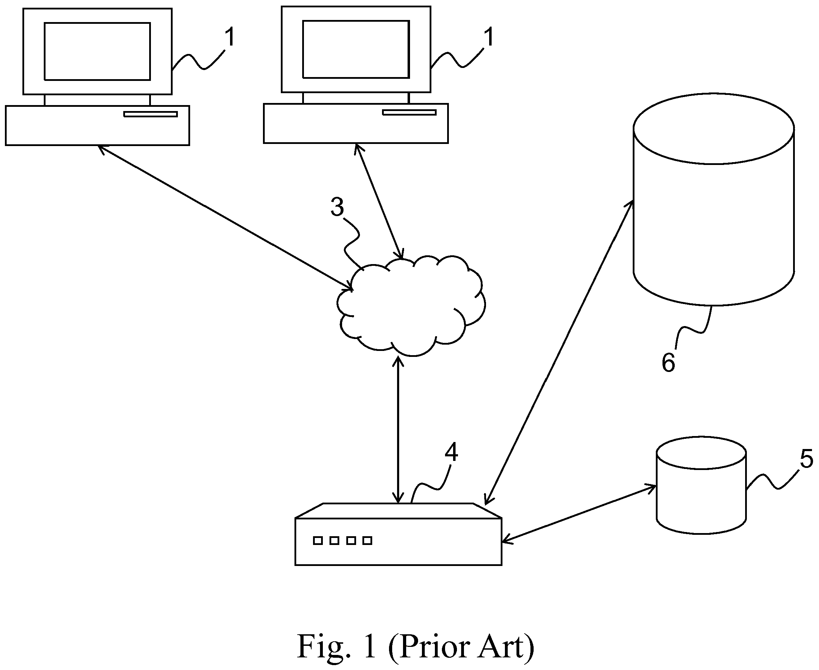

In a conventional working environment, please refer to Fig. 1, there are many client computers 1 connecting to a server 4 via Internet 3. The server 4 is the main equipment handling clients' requests, which may process complex computation or just execute access of stored data. For the latter, the stored data may be kept in a cache 5 or an auxiliary memory 6. The number of cache 5 or auxiliary memory 6 may not limit to 1. It can be any number as the cloud service requires. The server 4, cache 5 and auxiliary memory 6 form the architecture of the cloud service system. The cache 5 may refer to DRAM (Dynamic Random Access Memory) or SRAM (Static Random-Access Memory). The auxiliary memory 6 may be SSD (Solid State Drive), HDD (Hard Disk Drive), writable DVD, or even magnetic tape. Physical difference between the cache 5 and the auxiliary memory 6 is data storability after power-off. For the cache 5, data are temporarily stored when needed and disappear when power-off. However, the auxiliary memory 6 can store data for a very long time no matter it is on or off. The cache 5 has advantage of fast data access but disadvantages of volatility, high cost, and small storage space.

As the description above, it is obvious that determining the proper data to store in the cache 5 is important and can improve the performance of the cloud service since hot data (more accesses) can be accessed fast for most requests while cold data (less accesses) are provided with a tolerable slower speed. In average, time to response for all requests from the client computers 1 falls in an acceptable range. Currently, there are many conventional algorithms to determine data to be cached (stored in the cache 5). For example, Least Recently Used (LRU), Most Recently Used (MRU), Pseudo-LRU (PLRU), Segmented LRU (SLRU), 2-way set associative, Least-Frequently Used (LFU), Low Inter-reference Recent Set (LIRS), etc. These algorithms are performed by the characteristics of recency and frequency of the data been analyzed. The results have nothing to do with other data (not data-associated). There are some prior arts, such as Patent CN101777081A and DOI:10.1109/SKG.2005.136, disclosing another type of cache algorithm. They are categorized as "data-associated algorithms. They take original cache data (results from conventional cache algorithms) as target data to obtain "data-associated" data to be cached. It means new cached data are associated with the original cache data in certain degree (the new cache data have higher chance to appear along with the original cache data). The algorithms above are all found to be effective for some patterns of workloads. However, since they all count the data which appear within a relative time segment, rather than an absolute time segment, it causes a phenomenon that the data chosen to be cached in a first time segment, e.g. a first 8-hours, by all algorithms may not necessarily be accessed in a second time segment, e. g. a second 8-hours after the first 8-hours. It is quite easy to understand this since almost all data accesses are absolutely time-related or frequency-related, for example, booting during 8:55AM to 9:05AM every morning, meeting held in 2:00 PM Wednesdays, payroll billing once per two weeks, inventory conducted on the last day of every month, etc. Therefore, time stamp itself is an important and independent factor to consider for cached data. However, there is no such suitable solution yet.

### SUMMARY OF THE INVENTION

This paragraph extracts and compiles some features of the present invention; other features will be disclosed in the follow-up paragraphs. It is intended to cover various modifications and similar arrangements included within the spirit and scope of the appended claims.

The goal of the present invention is to provide a method for determining data in cache memory of a cloud storage system and a cloud storage system using the method. The method takes time-associated data accessed during a period of time in the past to analyze which data should be cached. The method includes the steps of: A. recording transactions from cache memory of a cloud storage system during a period of time in the past, wherein each transaction comprises a time of recording, or a time of recording and cached data been accessed during the period of time in the past; B. assigning a specific time in the future; C. calculating a time-associated confidence for every cached data from the transactions based on a reference time; D. ranking the time-associated confidences; and E. providing the cached data with higher time-associated confidence in the catch memory, and removing the cached data in the cache memory with lower time-associated confidence when the cache memory is full before the specific time in the future. The step E may be replaced by step E': providing the cached data with higher time-associated confidence and data calculated from at least one other cache algorithm in the catch memory to fill the cache memory before the specific time in the future, wherein there is a fixed ratio between the cached data with higher time-associated confidence and the data calculated from other cache algorithm.

According to the present invention, the fixed ratio may be calculated based on the number of the data or space occupied by the data. The specific time in the future is a specific minute in an hour, a specific hour in a day, a specific day in a week, a specific day in a month, a specific day in a season, a specific day in a year, a specific week in a month, a specific week in a season, a specific week in a year, or a specific month in a year. The transactions may be recorded regularly with a time span between two consecutively recorded transactions. The reference time may be within specific minutes in an hour, within specific hours in a day, or within specific days in a year.

The time-associated confidence is calculated and obtained by the steps of: C1. calculating a first number which is the number the reference time appeared in the period of time in the past; C2. calculating a second number which is the number of the reference time when a target cached data is accessed; and C3. dividing the second number by the first number.

Preferably, the cache algorithm is Least Recently Used (LRU) algorithm, Most Recently Used (MRU) algorithm, Pseudo-LRU (PLRU) algorithm, Random Replacement (RR) algorithm, Segmented LRU (SLRU) algorithm, 2-way set associative algorithm, Least-Frequently Used (LFU) algorithm, Low Inter-reference Recent Set (LIRS) algorithm, Adaptive Replacement Cache (ARC) algorithm, Clock with Adaptive Replacement (CAR) algorithm, Multi Queue (MQ) algorithm, or data-associated algorithm with target data coming from the result of step D. The data may be in a form of object, block, or file.

The present invention also discloses a cloud storage system. The cloud storage system includes: a host, for processing data access; a cache memory, connected to the host, for temporarily storing cached data for fast access; a transaction recorder, configured to or installed in the cache memory, connected to the host for recording transactions from the cache memory during a period of time in the past, wherein each transaction comprises a time of recording, or a time of recording and cached data been accessed during the period of time in the past, receiving a specific time in the future from the host, calculating a time-associated confidence for every cached data from the transactions based on a reference time, ranks the time-associated confidences, and providing the cached data with higher time-associated confidence in the catch memory, and removing the cached data in the cache memory with lower time-associated confidence when the cache memory is full before the specific time in the future; and a number of auxiliary memories, connected to the host, for distributedly storing data for access.

The cloud storage system may also include: a host, for processing data access; a cache memory, connected to the host, for temporarily storing cached data for fast access; a transaction recorder, configured to or installed in the cache memory, connected to the host for recording transactions from the cache memory during a period of time in the past, wherein each transaction comprises a time of recording, or a time of recording and cached data been accessed during the period of time in the past, receiving a specific time in the future from the host, calculating a time-associated confidence for every cached data from the transactions based on a reference time, ranks the time-associated confidences, and providing the cached data with higher time-associated confidence and data calculated from at least one other cache algorithm in the catch memory to fill the cache memory before the specific time in the future, wherein there is a fixed ratio between the cached data with higher time-associated confidence and the data calculated from other cache algorithm; and a number of auxiliary memories, connected to the host, for distributedly storing data for access. The fixed ratio may be calculated based on the number of the data or space occupied by the data.

According to the present invention, the specific time in the future may be a specific minute in an hour, a specific hour in a day, a specific day in a week, a specific day in a month, a specific day in a season, a specific day in a year, a specific week in a month, a specific week in a season, a specific week in a year, or a specific month in a year. The transactions may be recorded regularly with a time span between two consecutively recorded transactions. The reference time may be within specific minutes in an hour, within specific hours in a day, or within specific days in a year.

The time-associated confidence is calculated and obtained by the steps of: C1. calculating a first number which is the number the reference time appeared in the period of time in the past; C2. calculating a second number which is the number of the reference time when a target cached data is accessed; and C3. dividing the second number by the first number.

Preferably, the cache algorithm may be LRU algorithm, MRU algorithm, PLRU algorithm, RR algorithm, SLRU algorithm, 2-way set associative algorithm, LFU algorithm, LIRS algorithm, ARC algorithm, CAR algorithm, MQ algorithm, or data-associated algorithm with target data generated from the transaction recorder. The data may be in a form of object, block, or file.

The data cached are time-related. Thus, when the next related time comes, these data are most possible to be accessed. Before the related time, these data can be stored to the cache memory to improve the performance of the cloud storage system. This is what conventional cache algorithms are hard to achieve.

### BRIEF DESCRIPTION OF THE DRAWINGS

Fig. 1 is a schematic diagram of a conventional data access architecture.
Fig. 2 is a schematic diagram of a cloud storage system according to the present invention.
Fig. 3 is table of records of transactions.
Fig. 4 is a flow chart of the method provided by the present invention.
Fig. 5 and Fig. 6 tabularize calculated time-associated confidences for all cached data.

### DETAILED DESCRIPTION OF THE PREFERRED EMBODIMENTS

The present invention will now be described more specifically with reference to the following embodiments.

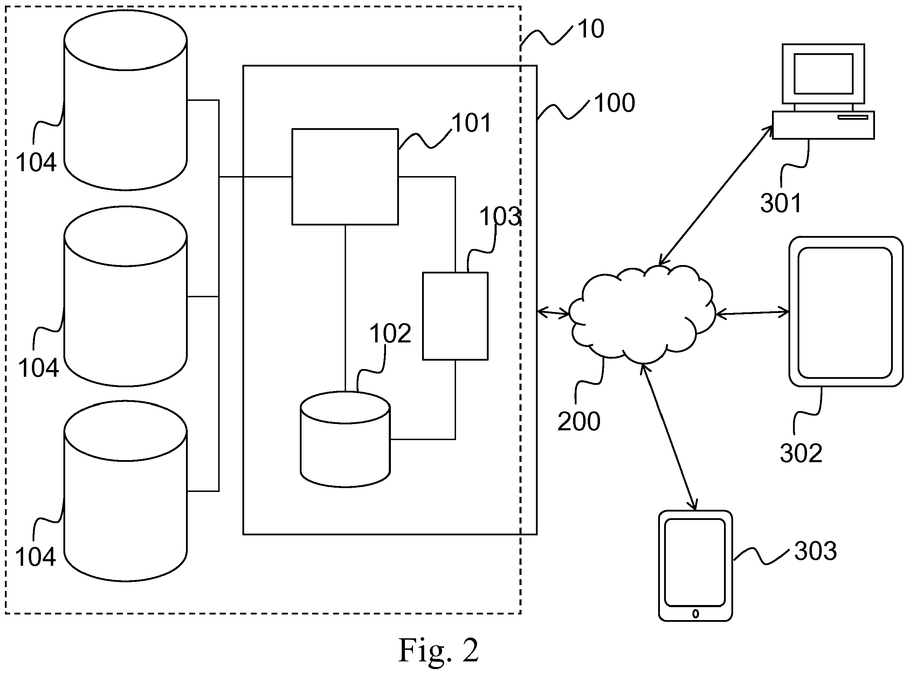

An ideal architecture to implement the present invention is shown in Fig. 2. A cloud storage system 10 includes a host 101, a cache memory 102, a transaction recorder 103, and a number of auxiliary memories 104. The cloud storage system 10 supports data storage for cloud services. It may partially be installed in a server 100 as shown in Fig. 2. The server 100 is the hardware to receive requests from client devices, such as a personal computer 301, a tablet 302, and a smartphone 303, or other remote devices via the Internet 200. After operations for the requests, the server 100 will transmit corresponding responses to the client devices reversely. A detailed description for each element is provided below.

Job function of the host 101 is mainly to process data access for the requests from the client devices. In fact, the host 101 may be a controller in the server 100. In other embodiments, if a CPU (Central Processing Unit) of the server 100 has the same function of the controller mentioned above, the host 101 can refer to the CPU or even the server 100 itself. It is not to define the host 100 by the form but its function. In addition, the host 101 may have further functions, e. g. fetching hot data to the cache memory 102 for caching. It is not in the scope of the present invention.

The cache memory 102 is connected to the host 101. It can temporarily store cached data for fast access. In practice, the cache memory 102 can be any hardware providing high speed data access. For example, the cache memory 102 may be an SRAM. The cache memory 102 may be an independent module for a large cloud storage system. Some architecture may embed it into the host 101 (CPU). Like caches in other cloud storage system, there may be a predefined caching algorithm to determine which data should be cached in the cache memory 102. The present invention is to provide a mechanism parallelly co-work with the existing caching algorithm for a specific purpose or timing. In fact, it can also dominate the caching mechanism to replace the cached data determined by the original caching algorithm.

The transaction recorder 103 is a key part in the cloud storage system 10. In this embodiment, it is a hardware module and configured to the cache memory 102. In other embodiment, the transaction recorder 103 may be software installed in a controller of the cache memory 102 or the host 101. In the present embodiment, the transaction recorder 103 is connected to the host 101. It has several functions that are the features of the present invention: recording transactions from the cache memory 102 during a period of time in the past, wherein each transaction includes a time of recording, or a time of recording and cached data been accessed during the period of time in the past, receiving a specific time in the future from the host 101, calculating a time-associated confidence for every cached data from the transactions based on a reference time, ranking the time-associated confidences, and providing the cached data with higher time-associated confidence in the catch memory 102 and removing the cached data in the cache memory 102 with lower time-associated confidence when the cache memory 102 is full before the specific time in the future (or providing the cached data with higher time-associated confidence and data calculated from other cache algorithm in the catch memory 102 to fill the cache memory 102 before the specific time in the future). These functions will be described with a method provided by the present invention later. It should be emphasized that the term "time-associated confidence" used in the present invention is similar to the definition of confidence value in the associated rule. The time-associated confidence is further extended to the confidence value calculated by taking a specific time or time segment as a target to obtain the probability one or more data had been accessed in the historical data.

The auxiliary memories 104 are also connected to the host 101. They can distributedly store data for access from the demands of clients. Different from the cache memory 102, the auxiliary memories 104 have slower I/O speed so that any data therein has slower access speed in response to access requests. Frequently accessed data in the auxiliary memories 104 will be duplicated and stored to the cache memory 102 for caching. In practice, the auxiliary memory 104 may be a SSD, HDD, writable DVD, or even magnetic tape. Arrangement of the auxiliary memories 104 depends on the purpose of the cloud storage system 10 or the workloads running over. In this example, there are 3 auxiliary memories 104. In fact, in a cloud storage system, the number of auxiliary memories may be hundreds to thousands, or even more.

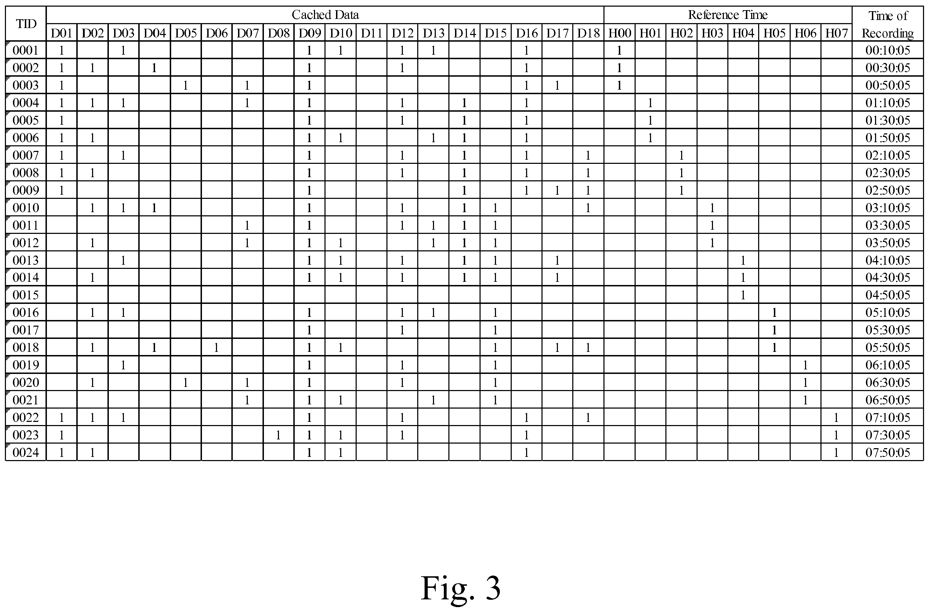

Before further description, some definitions used in the present invention are explained here. Please refer to Fig. 3. Fig. 3 is table of records of transactions. It is used to monitor how the data in the cache memory 102 were accessed in the past. The table has rows of TIDs (Transaction ID, from 0001 to 0024) and columns of cached data (from D01 to D18), reference time (from H00 to H08), and time to record. H00 refers to the time of recording falling between 00:00 to 01:00, H01 refers to the time of recording falling between 01:00 to 02:00, and so on. "1" in the entries of TID and cached data means the corresponding cached data had been accessed at least once before the "current" time of recording and the "last" time of recording. "1" in the entries of TID and reference time means to quantize the time of recording in different segments for the transactions. Transaction is a record of cached data been accessed during the period of time in the past. In this example, the records (transactions) in the past 8 hours are used for analysis. For a better illustration, each transaction has a corresponding TID for identifying. The transaction recorder 103 records transactions regularly with a time span between two consecutively recorded transactions. In this example, each transaction is recorded 20 minutes after the last translation is recorded. The time span is 20 minutes. In practice, the time of recording is not necessary to fall on a precise time schedule. For example, the time of recording may fall on 00:30:18, 00:50:17 etc., not exactly on the fifteenth second but a range around. This is because there might be some large data being accessed or the transaction recorder 103 is waiting feedback from the cache memory 102 remotely linked. A more aggressive means can be acceptable that the time span can be random. It is also in the scope of the present invention.

It should be noticed that in practice, the number of transactions is large and may be thousands or more, for example, ten minutes of time span and records over 3 months. 24 transactions are used only as an example for illustration. The more transactions the transaction recorder 103 has, the more precise a demand of data in a specific time in the future is predicted. Of course, not all data cached in the cache memory 102 may be accessed during a period of time. As shown in Fig. 3, the transaction 0015 has no record of data been accessed. It has only the time of recording, 04:50:05.

Before the method to determine data in the cache memory 102 is disclosed with the cloud storage system 10, look at the cached data first. Although there are 18 cached data, depending on the capacity of the cache memory 102, the number of the cached data may be larger than 18. The 18 cached data are currently available on 07:50:05 by the method of the present invention and/or other caching algorithms used by the cloud storage system 10. Since the transaction recorder 103 may add new data to the cache memory 102 from one of the auxiliary memories 104 if that data are accessed too often, cached data for analysis may change as well. There might be other data cached before 03:50:05 but removed because it is not requested or "expected to be accessed".

From Fig. 3, features of cached data can be obtained. Cached data D01 was accessed often in the first 3 hours and the last hour. Cached data D02 was averaged accessed every two 20 minutes. Cached data D03 was averaged accessed every three 20 minutes. Cached data D04 was averaged accessed during 00:10:05 to 00:30:05, 02:50:05 to 03:10:05, and 05:30:05 to 05:50:05. Cached data D05 was accessed during 00:30:05 to 00:50:05 and 06:10:05 to 06:30:05. Cached data D06 was only accessed once during 05:30:05 to 05:50:05. Cached data D07 was averaged accessed during 00:30:05 to 01:10:05, 03:10:05 to 03:50:05, and 06:10:05 to 06:50:05. Cached data D08 had accessed only once during 07:10:05 to 07:30:05. It might be the newest one added due to predicted demand after 07:10:05. Cached data D09 was accessed most frequent, almost every time segment except 04:30:05 to 04:50:05. Cached data D10 was accessed randomly. Cached data D11 has no record of access. Cached data D12 was averaged accessed every two 20 minutes. Cached data D13 was accessed randomly. Cached data D14 was accessed intensively from 00:50:05 to 04:30:05. Cached data D15 was accessed intensively from 02:50:05 to 06:50:05 except the time from 04:30:05 to 04:50:05. Cached data D16 has similar demand as that of the cached data D01. Cached data D17 and D18 were both averagely accessed, but the cached data D17 had more requests during 03:50:05 and 04:30:05 and the cached data D18 had more requests during 01:50:05 and 03:10:05.

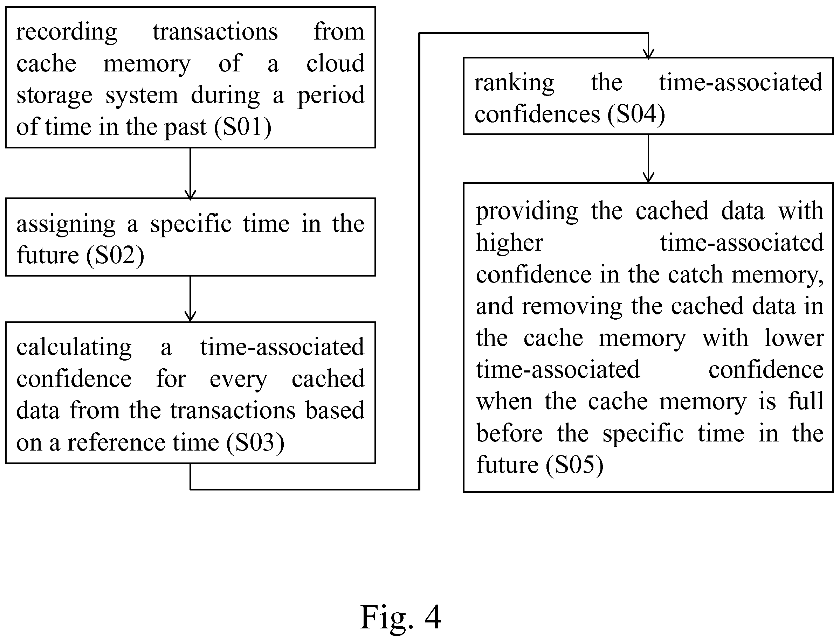

The main goal of the present invention is to predict requests of data at a specific time in the future according to the historical information and provide corresponding data in the cache memory 102 before the specific time in the future comes. A method to determine data in cache memory 102 of the cloud storage system 10 has several processes. Please refer to Fig. 4. It is a flow chart of the method provided by the present invention. As mentioned above, the method is carried out by the transaction recorder 103. First, record transactions from the cache memory 102 of the cloud storage system 10 during a period of time in the past (S01). Each transaction includes only a time of recording (transaction 0015), or a time of recording and cached data been accessed during the period of time in the past (8 hours in the example). Then, assign a specific time in the future (S02). The cache memory 102 receives the specific time in the future from the host 101. According to the present invention, the specific time in the future can be any time or a period of time in the future. For example, it can be a specific minute in an hour (for every hour), a specific hour in a day (for everyday), a specific day in a week (for every week), a specific day in a month (for every month), a specific day in a season (for every season), a specific day in a year (for every year), a specific week in a month (for every month), a specific week in a season (for every season), a specific week in a year (for every year), or a specific month in a year (for every year). In this example, the transactions are used to determine which data should be cached before 00:00:00 (H00) on the other day.

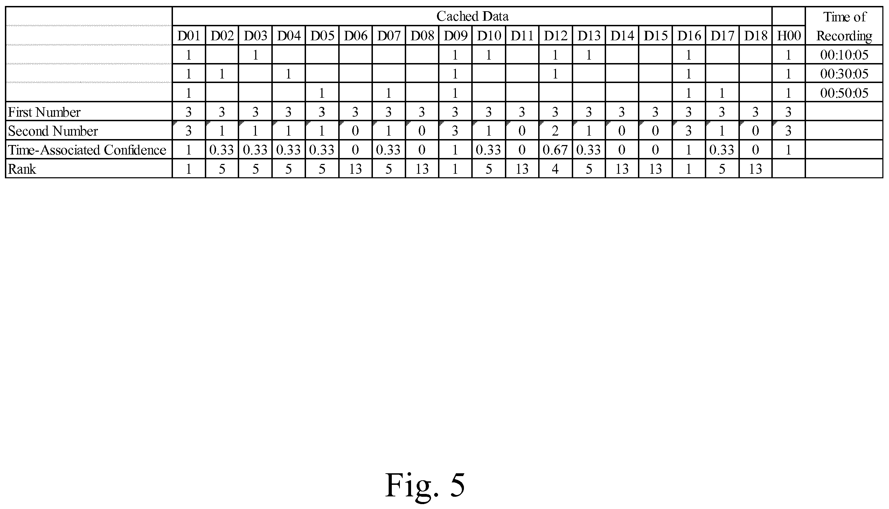

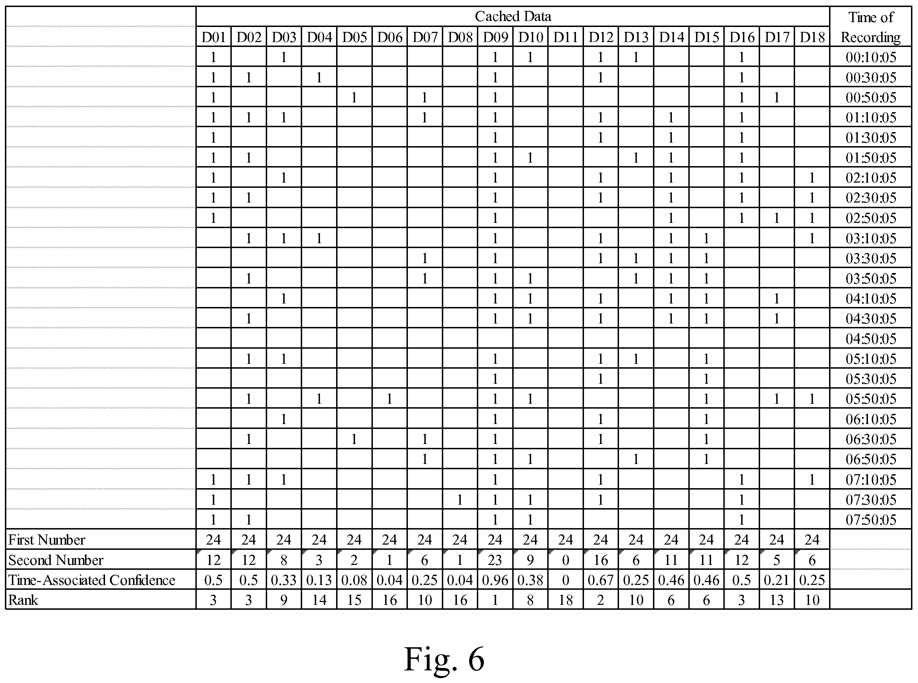

The third step is to calculate a time-associated confidence for every cached data from the transactions based on a reference time (S03). The reference time refers to the time "within specific minutes in an hour" (H00, each 20 minutes in the first hour of a day). In other example, the reference time may be "within specific hours in a day" or "within specific days in a year", depending on the number of records and time span. In particular example, the reference time can be "within all sub-time units of a main-time units". For example, within 24 hours in a day. The time-associated confidence is calculated and obtained by the steps of: A. calculating a first number which is the number the reference time appeared in the period of time in the past; B. calculating a second number which is the number of the reference time when a target cached data is accessed; and C. dividing the second number by the first number. In this example, the calculated time-associated confidences for all data are tabularized in Fig. 5. If the specific time in the future is the first minute of 8:00AM and the reference time refers to all 20 minutes in the past 8 hours, the results are shown on Fig. 6. From Fig. 5 and Fig. 6, based on different conditions, each cached data has different calculated time-associated confidence relative to other cached data.

Next, rank the time-associated confidences (S04). The results of the examples are also shown in Fig. 5 and Fig. 6, respectively. Last, provide the cached data with higher time-associated confidence in the catch memory 102, and remove the cached data in the cache memory with lower time-associated confidence when the cache memory 102 is full before the specific time in the future (S05). Take Fig. 6 as an example. Before 00:00 the other day, maybe at 12:59:59 PM, all data except D11 are stored to the catch memory 102 for the access requests after 00:00 as new cached data. The reason D11 is removed is the space in the catch memory 102 is not large enough for 18 data and D11 has time-associated confidence lower than others'. The reason there are 18 cached file for analysis is there is one or more cached data had been removed by the cloud storage system 10 for low hit ratio or other reason and new data (D08) was added. The number of all the cached data used is 18. The newly cached data in the catch memory 102 are the most possible data which might be requested after 08:00. They are calculated based on time-associated confidences. It should be notice that the data or cached data mentioned above may be in a form of an object, a block, or a file.

In another embodiment, the last step (S05) can be different. It means the transaction recorder 103 has different function other than the one in the previous embodiment. The changed step is providing the cached data with higher time-associated confidence and data calculated from at least one other cache algorithm in the catch memory 102 to fill the cache memory 102 before the specific time in the future. There is a fixed ratio between the cached data with higher time-associated confidence and the data calculated from other cache algorithm. The fixed ratio is calculated based on the number of the data or space occupied by the data. Come back to Fig. 6 again. If the catch memory 102 is set to cache 20 data, when the ratio for the cached data from the present method is 60% and the rest data calculated from other cache algorithm occupy 40%, the cached data from the method of the present invention are D01, D02, D03, D07, D09, D10, D12, D13, D14, D15, D16, and D18, 12 data in number. The rest data are proposed from said cache algorithm. If there are some identical cached data provided by each one, data with lower priority calculated by the method or the cache algorithm can be used. It is not limited by the present invention. Of course, in most cases, the catch memory 102 is designed to cache data by its capacity, rather than number of data. From the example above, 60% of capacity of the catch memory 102 should be filled with data determined by the present invention while the rest 40% are determined and provided by at least one existing cache algorithm. Said cache algorithm includes, but not limited to Least Recently Used (LRU) algorithm, Most Recently Used (MRU) algorithm, Pseudo-LRU (PLRU) algorithm, Random Replacement (RR) algorithm, Segmented LRU (SLRU) algorithm, 2-way set associative algorithm, Least-Frequently Used (LFU) algorithm, Low Inter-reference Recent Set (LIRS) algorithm, Adaptive Replacement Cache (ARC) algorithm, Clock with Adaptive Replacement (CAR) algorithm, Multi Queue (MQ) algorithm, or the data-associated algorithm defined in the background of the invention. It should be noticed that if the data-associated algorithm is applied, the target data should be the result coming from the present invention. That means the cache data obtained with higher rankings from the step S04 are re-inputted to the data-associated algorithm as the target data to have the result from the data-associated algorithm. In the cloud storage system 10, it is the transaction recorder 103 generating the target data for the data-associated algorithm. The data-associated algorithm can be executed by the transaction recorder 103 as well.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims, which are to be accorded with the broadest interpretation so as to encompass all such modifications and similar structures.

## Claims

1. A method for determining data in cache memory of a cloud storage system, comprising the steps of:
A.recording transactions from cache memory of a cloud storage system during a period of time in the past, wherein each transaction comprises a time of recording, or a time of recording and cached data been accessed during the period of time in the past;
B. assigning a specific time in the future;
C. calculating a time-associated confidence for every cached data from the transactions based on a reference time;
D.ranking the time-associated confidences; and
E. providing the cached data with higher time-associated confidence in the catch memory, and removing the cached data in the cache memory with lower time-associated confidence when the cache memory is full before the specific time in the future.

2. The method according to claim 1, wherein the specific time in the future is a specific minute in an hour, a specific hour in a day, a specific day in a week, a specific day in a month, a specific day in a season, a specific day in a year, a specific week in a month, a specific week in a season, a specific week in a year, or a specific month in a year; and the reference time is within specific minutes in an hour, within specific hours in a day, or within specific days in a year.

3. The method according to claim 1, wherein the transactions are recorded regularly with a time span between two consecutively recorded transactions.

4. The method according to claim 1, wherein the time-associated confidence is calculated and obtained by the steps of:
C1. calculating a first number which is the number the reference time appeared in the period of time in the past;
C2. calculating a second number which is the number of the reference time when a target cached data is accessed; and
C3. dividing the second number by the first number.

5. The method according to claim 1, wherein the data is in a form of object, block, or file.

6. A method for determining data in cache memory of a cloud storage system, comprising the steps of:
A.recording transactions from cache memory of a cloud storage system during a period of time in the past, wherein each transaction comprises a time of recording, or a time of recording and cached data been accessed during the period of time in the past;
B. assigning a specific time in the future;
C. calculating a time-associated confidence for every cached data from the transactions based on a reference time;
D.ranking the time-associated confidences; and
E. providing the cached data with higher time-associated confidence and data calculated from at least one other cache algorithm in the catch memory to fill the cache memory before the specific time in the future, wherein there is a fixed ratio between the cached data with higher time-associated confidence and the data calculated from other cache algorithm.

7. The method according to claim 6, wherein the fixed ratio is calculated based on the number of the data or space occupied by the data.

8. The method according to claim 6, wherein the cache algorithm is Least Recently Used (LRU) algorithm, Most Recently Used (MRU) algorithm, Pseudo-LRU (PLRU) algorithm, Random Replacement (RR) algorithm, Segmented LRU (SLRU) algorithm, 2-way set associative algorithm, Least-Frequently Used (LFU) algorithm, Low Inter-reference Recent Set (LIRS) algorithm, Adaptive Replacement Cache (ARC) algorithm, Clock with Adaptive Replacement (CAR) algorithm, Multi Queue (MQ) algorithm, or data-associated algorithm with target data coming from the result of step D.

9. A cloud storage system, comprising:
a host, for processing data access;
a cache memory, connected to the host, for temporarily storing cached data for fast access;
a transaction recorder, configured to or installed in the cache memory, connected to the host for recording transactions from the cache memory during a period of time in the past, wherein each transaction comprises a time of recording, or a time of recording and cached data been accessed during the period of time in the past, receiving a specific time in the future from the host, calculating a time-associated confidence for every cached data from the transactions based on a reference time, ranks the time-associated confidences, and providing the cached data with higher time-associated confidence in the catch memory, and removing the cached data in the cache memory with lower time-associated confidence when the cache memory is full before the specific time in the future; and
a plurality of auxiliary memories, connected to the host, for distributedly storing data for access.

10. The cloud storage system according to claim 9, wherein the fixed ratio is calculated based on the number of the data or space occupied by the data.

11. The cloud storage system according to claim 9, wherein the specific time in the future is a specific minute in an hour, a specific hour in a day, a specific day in a week, a specific day in a month, a specific day in a season, a specific day in a year, a specific week in a month, a specific week in a season, a specific week in a year, or a specific month in a year; and the reference time is within specific minutes in an hour, within specific hours in a day, or within specific days in a year.

12. The cloud storage system according to claim 9, wherein the transactions are recorded regularly with a time span between two consecutively recorded transactions.

13. The cloud storage system according to claim 9, wherein the time-associated confidence is calculated and obtained by the steps of:
C1. calculating a first number which is the number the reference time appeared in the period of time in the past;
C2. calculating a second number which is the number of the reference time when a target cached data is accessed; and
C3. dividing the second number by the first number.

14. A cloud storage system, comprising:
a host, for processing data access;
a cache memory, connected to the host, for temporarily storing cached data for fast access;
a transaction recorder, configured to or installed in the cache memory, connected to the host for recording transactions from the cache memory during a period of time in the past, wherein each transaction comprises a time of recording, or a time of recording and cached data been accessed during the period of time in the past, receiving a specific time in the future from the host, calculating a time-associated confidence for every cached data from the transactions based on a reference time, ranks the time-associated confidences, and providing the cached data with higher time-associated confidence and data calculated from at least one other cache algorithm in the catch memory to fill the cache memory before the specific time in the future, wherein there is a fixed ratio between the cached data with higher time-associated confidence and the data calculated from other cache algorithm; and
a plurality of auxiliary memories, connected to the host, for distributedly storing data for access.

15. The cloud storage system according to claim 14, wherein the data is in a form of object, block, or file; and the cache algorithm is LRU algorithm, MRU algorithm, PLRU algorithm, RR algorithm, SLRU algorithm, 2-way set associative algorithm, LFU algorithm, LIRS algorithm, ARC algorithm, CAR algorithm, MQ algorithm, or data-associated algorithm with target data generated from the transaction recorder.
